# EUROPEAN PATENT APPLICATION

(11) **EP 4 098 621 A1**
(43) Date of publication of application: **07.12.2022**
(21) Application number: 21748029.2
(22) Date of filing: 26.01.2021
(51) Int. Cl.: C01G 45/00, C01G 53/00, H01M 4/505, H01M 4/525

(54) **POSITIVE ELECTRODE ACTIVE SUBSTANCE FOR NON-AQUEOUS ELECTROLYTE SECONDARY BATTERY, AND NON-AQUEOUS ELECTROLYTE SECONDARY BATTERY**

(30) Priority: 31.01.2020 JP 2020015407
(71) Applicant: Panasonic Intellectual Property Management Co., Ltd., Osaka-shi, Osaka 540-6207 (JP)
(72) Inventor: ZHANG, Jin, Chuo-ku, Osaka-shi, Osaka 540-6207 (JP); IKEUCHI, Issei, Chuo-ku, Osaka-shi, Osaka 540-6207 (JP); HIBINO, Mitsuhiro, Chuo-ku, Osaka-shi, Osaka 540-6207 (JP); NAKURA, Kensuke, Chuo-ku, Osaka-shi, Osaka 540-6207 (JP)
(74) Representative: Novagraaf International SA
(86) International application number: PCT/JP2021/002527
(87) International publication number: WO 2021/153527

(57) **Abstract**

This positive electrode active substance for a non-aqueous electrolyte secondary battery contains a lithium-transition metal composite oxide which has a crystal structure belonging to the space group Fm-3m and is represented by the compositional formula LiₓMn_{y}MₐO_{b}F_{c} (in the formula: M is at least one type of metal element excluding Mn; x+y+a=b+c=2; 1 < x ≤ 1.35; 0.4 ≤ y ≤ 0.9; 0 ≤ a ≤ 0.2; and 1.3 ≤ b ≤ 1.8). In addition, the lattice constant a of the lithium-transition metal composite oxide is 4.09-4.16.

## Description

### TECHNICAL FIELD

The present disclosure generally relates to a positive electrode active material for a non-aqueous electrolyte secondary battery and a non-aqueous electrolyte secondary battery using the positive electrode active material.

### BACKGROUND ART

In a non-aqueous electrolyte secondary battery such as a lithium-ion battery, a positive electrode active material significantly affects battery performance such as inputoutput characteristics, a capacity, and cycle characteristics. Although an NCM-based lithium-transition metal composite oxide containing Ni, Co, and Mn is commonly used for the positive electrode active material, for example, a Li-excess material based on LiₓMn₁₋ₓO₂ having a rock-salt structure has attracted attention in recent years as a next-generation positive electrode active material with high capacity.

For example, Patent Literature 1 discloses a positive electrode active material including a lithium-transition metal composite oxide having a crystal structure belonging to a space group Fm-3m and represented by the compositional formula Li₁₊ₓNb_{y}Me_{z}AₚO₂, wherein Me is a transition metal including Fe and/or Mn, 0 < x < 1, 0 < y < 0.5, 0.25 ≤ z < 1, A is an element other than Nb and Me, and 0 ≤ p ≤ 0.2, provided that an oxide of Li₁₊ₚFe_{1-q}Nb_{q}O₂ wherein 0.15 < p ≤ 0.3 and 0 < q ≤ 0.3 is excluded.

### CITATION LIST

### PATENT LITERATURE

PATENT LITERATURE 1: Japanese Patent No. 6197029

### SUMMARY

As described above, the material based on LiₓMn₁₋ₓO₂ having a rock-salt structure is expected as a positive electrode active material with high capacity; however, it has a wide voltage distribution (various Li environment) and has a large capacity not in practical use. Thus, high capacity as expected has not been achieved. The same applies to the positive electrode active material disclosed in Patent Literature 1, and a breakthrough for high capacity is required.

A positive electrode active material for a non-aqueous electrolyte secondary battery of an aspect of the present disclosure includes a lithium-transition metal composite oxide having a crystal structure belonging to a space group Fm-3m and represented by the compositional formula LiₓMn_{y}MₐO_{b}F_{c}, wherein M is at least one metal element excluding Mn, x + y + a = b + c = 2, 1 < x ≤ 1.35, 0.4 ≤ y ≤ 0.9, 0 ≤ a ≤ 0.2, and 1.3 ≤ b ≤ 1.8, wherein a lattice constant a of the lithium-transition metal composite oxide is 4.09 to 4.16.

A non-aqueous electrolyte secondary battery of an aspect of the present disclosure comprises: a positive electrode including the positive electrode active material; a negative electrode; a separator interposed between the positive electrode and the negative electrode; and a non-aqueous electrolyte.

According to the present disclosure, a positive electrode active material with high capacity can be provided. According to the positive electrode active material according to the present disclosure, remarkably high capacity of a non-aqueous electrolyte secondary battery can be achieved.

### BRIEF DESCRIPTION OF DRAWINGS

FIG. 1 is a sectional view of a non-aqueous electrolyte secondary battery of an example of an embodiment.
FIG. 2 is a graph indicating a relationship between a composition and lattice constant a of a positive electrode active material of an example of an embodiment.

### DESCRIPTION OF EMBODIMENTS

As described above, the material based on LiₓMn₁₋ₓO₂ having a rock-salt structure has a large capacity not in practical use, and high capacity as expected has not been achieved in a non-aqueous electrolyte secondary battery using the material. The present inventors have intensively investigated increasing the capacity of the material, and as a result, have found that introducing a predetermined amount of fluoride ions, and setting a lattice constant a to be smaller than a value estimated from the composition or regulating it within a range of 4.09 to 4.16 specifically increase the battery capacity. Although a mechanism of the increase in the capacity is unclear, the art of the present disclosure can be a breakthrough for practical use of the next-generation positive electrode active material with high capacity.

A value in a parenthesis with the lattice constant a herein indicates an error in a third decimal place. For example, 4.115(2) means a lattice constant a of 4.113 to 4.117. The lattice constant a is determined by using integrated powder X-ray analysis software PDXL attached to an X-ray diffraction apparatus manufactured by Rigaku Corporation, and the lattice constant a determined by the PDXL is attached with such a value indicating an error range.

Hereinafter, an example of embodiments of the positive electrode active material for a non-aqueous electrolyte secondary battery according to the present disclosure and a non-aqueous electrolyte secondary battery using the positive electrode active material will be described in detail with reference to the drawings. It is anticipated in advance to selectively combine a plurality of embodiments and modified examples described below.

Hereinafter, a cylindrical battery in which a wound electrode assembly 14 is housed in a bottomed cylindrical exterior housing can 16 will be exemplified, but an exterior housing body is not limited to a cylindrical exterior housing can and may be, for example, a rectangular exterior housing can (rectangular battery), a coin-shaped exterior housing can (coin battery), or an exterior housing body constituted with laminated sheets including a metal layer and a resin layer (laminate battery). The electrode assembly may be a stacked electrode assembly in which a plurality of positive electrodes and a plurality of negative electrodes are alternatively stacked with separators interposed therebetween.

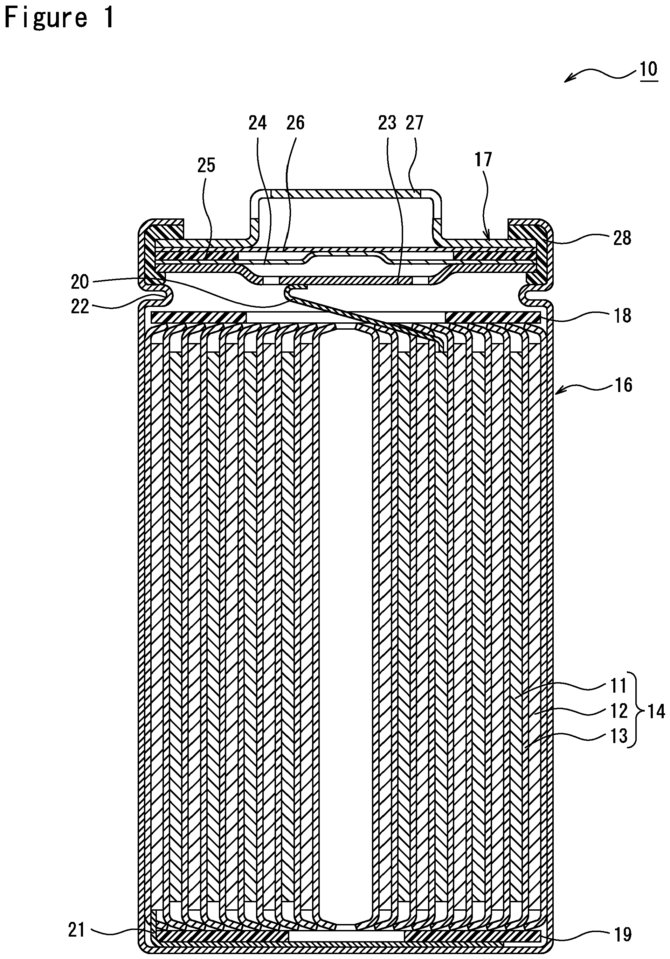

FIG. 1 is a sectional view of a non-aqueous electrolyte secondary battery 10 of an example of an embodiment. As exemplified in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted solvent in which at least some hydrogens in these solvents are substituted with halogen atoms such as fluorine. For the electrolyte salt, a lithium salt such as LiPF6 is used, for example. The electrolyte is not limited to a liquid electrolyte, and may be a solid electrolyte.

Any of the positive electrode 11, negative electrode 12, and separator 13 constituting the electrode assembly 14 is a band-shaped elongated body, and spirally wound to be alternatively stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to, for example, sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved part 22 in which a part of a side part thereof projects inside for supporting the sealing assembly 17 is formed. The grooved part 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved part 22 and with an end part of the opening of the exterior housing can 16 calked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected each other. The lower vent member 24 and the upper vent member 26 are connected at each of central parts thereof, and the insulating member 25 is interposed between each of the circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, negative electrode 12, and separator 13, which constitute the electrode assembly 14, and particularly a positive electrode active material constituting the positive electrode 11 will be described in detail.

### [Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, the binder, and the like on the positive electrode core, drying and subsequently compressing the applied film to form the positive electrode mixture layers on both the surfaces of the positive electrode core.

Examples of the conductive agent included in the positive electrode mixture layer may include a carbon material such as carbon black, acetylene black, Ketjenblack, and graphite. Examples of the binder included in the positive electrode mixture layer may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethyl cellulose (CMC) or a salt thereof, polyethylene oxide (PEO), and the like may be used in combination.

The positive electrode active material includes a lithium-transition metal composite oxide having a crystal structure belonging to a space group Fm-3m and represented by the compositional formula LiₓMn_{y}MₐO_{b}F_{c}, wherein M is at least one metal element excluding Mn, x + y + a = b + c = 2, 1 < x ≤ 1.35, 0.4 ≤ y ≤ 0.9, 0 ≤ a ≤ 0.2, and 1.3 ≤ b ≤ 1.8. The composite oxide is a Li-excess material having a molar ratio of Li to the transition metal of more than 1. A predetermined amount of fluoride ions (0.2 ≤ c ≤ 0.7) are introduced to replace some O with F.

Although a composite oxide other than the above composite oxide (for example, a composite oxide being not Li-excess and a composite compound containing no fluoride ion) may be used in combination for the positive electrode active material in the positive electrode 11, a content of the above composite oxide is preferably 50 mass% or more, and may be substantially 100 mass%. A composition of the composite oxide may be measured by using an ICP emission spectroscopy analyzer (iCAP6300, manufactured by Thermo Fisher Scientific K.K.).

The lithium-transition metal composite oxide has a rock-salt crystal structure belonging to the space group Fm-3m. The rock-salt crystal structure belonging to the space group Fm-3m is generally an irregular structure in which lithium and a transition metal are randomly arranged. The composite oxide of the present embodiment, however, has a lattice constant a being out of the lattice constant estimated from the composition, as described later, and may have a structure in which the random arrangement is ordered in some degree. The crystal structure of the composite oxide is identified from an X-ray diffraction pattern measured by using a powder X-ray diffraction apparatus (desktop X-ray diffraction apparatus, MiniFlex, manufactured by Rigaku Corporation, X-ray source: CuKα).

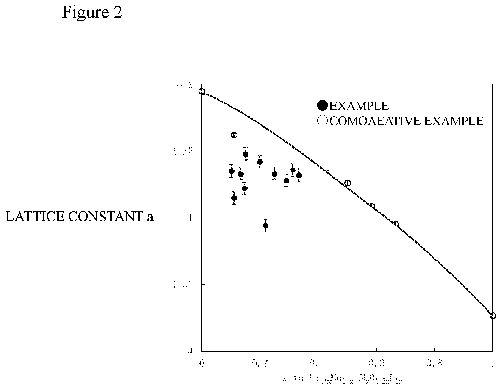

FIG. 2 is a graph indicating a relationship between the composition and lattice constant a of the lithium-transition metal composite oxide represented by the compositional formula Li₁₊ₓMn_{1-x-y}M_{y}O₂₋₂ₓF₂ₓ. The horizontal axis indicates x in the compositional formula Li₁₊ₓMn_{1-x-y}M_{y}O₂₋₂ₓF₂ₓ, and the vertical axis indicates the lattice constant a. The dashed line in FIG. 2 indicates a lattice constant estimated from the composition (the compositional ratio between LiF and LiMnO₂), and filled circle (●) indicates the lattice constant a of the lithium-transition metal composite oxide of the present embodiment.

In the lithium-transition metal composite oxide of an aspect of an embodiment, x in the compositional formula Li₁₊ₓMn_{1-x-y}M_{y}O₂₋₂ₓF₂ₓ satisfies 0 < x ≤ 0.35, preferably 0.1 ≤ x ≤ 0.35, and more preferably 0.1 ≤ x ≤ 0.3. As indicated in FIG. 2, the lattice constant a of the lithium-transition metal composite oxide is smaller than the lattice constant estimated from the composition. When the composite oxide has the crystal structure belonging to the space group Fm-3m and the above composition and satisfies the above condition of the lattice constant a, the capacity of the composite oxide specifically increases.

The lattice constant a of the lithium-transition metal composite oxide of an aspect of an embodiment is 4.09 to 4.16, preferably 4.10 to 4.15, and more preferably 4.11 to 4.14. In the lithium-transition metal composite oxide represented by the compositional formula Li₁₊ₓMn_{1-x-y}M_{y}O₂₋₂ₓF₂ₓ, the effect of increase in the capacity more remarkably appears in a case of, for example, 0.1 ≤ x ≤ 0.35 and the lattice constant a of 4.09 to 4.16.

The lithium-transition metal composite oxide of an aspect of an embodiment may contain a metal element other than Li and Mn, as above. Examples of the metal element M in the compositional formula LiₓMn_{y}MₐO_{b}F_{c} include at least one selected from the group consisting of Ni, Co, Fe, Al, Sn, Cu, Nb, Mo, Bi, Ti, V, Cr, Y, Zr, Zn, Na, K, Ca, Mg, Pt, Au, Ag, Ru, Ta, W, La, Ce, Pr, Sm, Eu, Dy, and Er. Among them, at least one selected from the group consisting of Ni, Sn, Mo, Ti, W, Zn, and Al is preferable.

In the compositional formula LiₓMn_{y}MₐO_{b}F_{c}, x representing the compositional ratio of Li satisfies 1 < x ≤ 1.35, preferably 1.1 ≤ x ≤ 1.35, and more preferably 1.1 ≤ x ≤ 1.3. In this case, the effect of increase in the capacity more remarkably appears. Also, b representing the compositional ratio of O satisfies 1.3 ≤ b ≤ 1.8, and preferably 1.35 ≤ b < 1.8. That is, c representing the compositional ratio of F satisfies 0.2 ≤ c ≤ 0.7, and preferably 0.2 ≤ c ≤ 0.65. A ratio of the number of moles of F to the number of moles of O (N_{F}/N_{O}) is, for example, 0.1 to 0.6, and preferably 0.5 or less.

The lithium-transition metal composite oxide may be synthesized by, for example, using lithium fluoride (LiF) and lithium manganate (LiMnO₂) as raw materials, and performing a mixing treatment with a planetary ball mill in an inert gas atmosphere such as Ar. For the raw materials, LiO₂ and Mn₂O₃ may be used. A mixer that may apply a similar stirring shear force to the powder may be used instead of the planetary ball mill, and the powder may be heated during the mixing treatment. The composition, lattice constant a, and the like of the composite oxide may be regulated within a target range by changing, for example, a mixing ratio between LiF and LiMnO₂ and mixing conditions (such as the number of rotation, a time of the treatment, and a temperature of the treatment).

### [Negative Electrode]

The negative electrode 12 has a negative electrode core and a negative electrode mixture layer provided on a surface of the negative electrode core. For the negative electrode core, a foil of a metal stable within a potential range of the negative electrode 12, such as copper, a film in which such a metal is disposed on a surface layer thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material, the conductive agent, the binder, and the like on the surface of the negative electrode core, drying and subsequently compressing the applied film to form the negative electrode mixture layers on both the surfaces of the negative electrode core.

The negative electrode mixture layer includes, for example, a carbon-based active material to reversibly occlude and release lithium ions, as the negative electrode active material. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the conductive agent included in the negative electrode mixture layer, a carbon material such as carbon black, acetylene black, Ketjenblack, and graphite may be used similar to that in the positive electrode 11. For the binder included in the negative electrode mixture layer, a fluororesin, PAN, a polyimide, an acrylic resin, a polyolefin, and the like may be used similar to that in the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

### [Separator]

For the separator 13, a porous sheet having an ion permeation property and an insulation property is used. Specific examples of the porous sheet include a fine porous thin film, a woven fabric, and a nonwoven fabric.

For a material of the separator 13, a polyolefin such as polyethylene, polypropylene, and a copolymer of ethylene and an α-olefin, cellulose, and the like are preferable. The separator 13 may have any of a single-layered structure and a multilayered structure. On a surface of the separator 13, a heat-resistant layer including inorganic particles, a heat-resistant layer constituted with a highly heat-resistant resin such as an aramid resin, a polyimide, and a polyamideimide, and the like may be formed.

### EXAMPLES

Hereinafter, the present disclosure will be further described with Examples, but the present disclosure is not limited to these Examples.

### <Example 1>

### [Synthesis of Positive Electrode Active Material]

Lithium fluoride (LiF) and lithium manganate (LiMnO₂) were mixed at a predetermined mass ratio. The mixed powder was fed into a planetary ball mill (Premium-Line P7, manufactured by Fritsch GmbH, the number of rotation: 600 rpm, chamber: 45 mL, ball: Zr ball with φ3 mm), and treated in an Ar atmosphere at a room temperature for 35 hours (35 cycles of operation for 1 hour and subsequently rest for 10 minutes) to use a lithium-transition metal composite oxide represented by the compositional formula Li_{1.196}Mn_{0.804}O_{1.797}F_{0.203}. An X-ray diffraction pattern of the obtained composite oxide was measured and analyzed with the above method, and the obtained composite oxide had a crystal structure belonging to the space group Fm-3m and a lattice constant a of 4.135(2).

### [Production of Positive Electrode]

The obtained positive electrode active material, acetylene black, and polyvinylidene fluoride were mixed at a solid-content mass ratio of 7:2:1, and N-methyl-2-pyrrolidone (NMP) was used as a dispersion medium to prepare a positive electrode mixture slurry. Then, the positive electrode mixture slurry was applied on a positive electrode core made of aluminum foil, the applied film was dried and compressed, and then cut to a predetermined electrode size to obtain a positive electrode.

### [Preparation of Non-Aqueous Electrolyte Liquid]

Ethylene carbonate (EC), ethyl methyl carbonate (EMC), and dimethyl carbonate (DMC) were mixed at a predetermined volume ratio. Into the mixed solvent, LiPF6 was added to obtain a non-aqueous electrolyte liquid.

### [Production of Test Cell]

The above positive electrode and a negative electrode made of lithium metal foil were oppositely disposed with a separator interposed therebetween to constitute an electrode assembly, and the electrode assembly was housed in a coin-shaped exterior housing can. The non-aqueous electrolyte liquid was injected into the exterior housing can, and then the exterior housing can was sealed to obtain a coin-shaped test cell (non-aqueous electrolyte secondary battery).

On the test cell, an initial discharge capacity was evaluated with the following method. The evaluation result is shown in Table 1 together with the composition and lattice constant a of the positive electrode active material.

### [Evaluation of Initial Discharge Capacity]

Under a normal temperature environment, the test cell was CC-charged at a constant current of 0.05 C until a battery voltage of 5.2 V, then rested for 20 minutes, and CC-discharged at a constant current of 0.05 C until a battery voltage of 2.5 V to measure a discharge capacity.

### <Examples 2 to 10 and Comparative Examples 1 to 5>

Test cells were produced to evaluate the initial discharge capacity in the same manner as in Example 1 except that the mixing ratio of LiF and LiMnO₂ and mixing conditions were changed in the synthesis of the lithium-transition metal composite oxide so as to obtain the composition and the lattice constant a shown in Table 1.

**[Table 1]**

| | Positive electrode active material | | | Test cell |
|---|---|---|---|---|
| | Composition Li₁₊ₓMn₁₋ₓO₂₋₂ₓF₂. | N_{F}/N_{O} | Lattice constant a (Å) | Initial discharge capacity (mAh/g) |
| Example 1 | Li_{1.196}Mn_{0.804}O_{1.797}F_{0.203} | 0.113 | 4.135(2) | 305.5 |
| Example 2 | Li_{1.111}Mn_{0.889}O_{1.778}F_{0.222} | 0.125 | 4.115(2) | 308.2 |
| Example 3 | Li_{1.15}Mn_{0.85}O_{1.7}F_{0.3} | 0.176 | 4.148(2) | 294.3 |
| Example 4 | Li_{1.2}Mn_{0.8}O_{1.6}F_{0.4} | 0.250 | 4.142(2) | 296.6 |
| Example 5 | Li_{1.25}Mn_{0.75}O_{1.5}F_{0.5} | 0.333 | 4.133(3) | 310.9 |
| Example 6 | | | 4.158(2) | 304.7 |
| Example 7 | Li_{1.292}Mn_{0.708}O_{1.417}F_{0.583} | 0.411 | 4.128(2) | 322.9 |
| Example 8 | Li_{1.312}Mn_{0.688}O_{1.375}F_{0.625} | 0.455 | 4.136(3) | 297.5 |
| Example 9 | Li_{1.333}Mn_{0.667}O_{1.333}F_{0.667} | 0.500 | 4.132(8) | 287.0 |
| Example 10 | Li_{1.118}Mn_{0.706}Ti_{0.088}O_{1.732}F_{0.268} | 0.155 | 4.133(2) | 311.7 |
| Example 11 | Li_{1.147}Mn_{0.747}Ni_{0.106}O_{1.706}F_{0.294} | 0.172 | 4.122(4) | 294.3 |
| Example 12 | Li_{1.220}Mn_{0.658}Ni_{0.122}O_{1.561}F_{0.439} | 0.281 | 4.094(3) | 298.0 |
| Comparative Example 1 | LiMnO₂ | 0 | 4.166(2) | 165.9 |
| Comparative Example 2 | Li_{1.111}Mn_{0.889}O_{1.778}F_{0.222} | 0.125 | 4.162(1) | 244.4 |
| Comparative Example 3 | Li_{1.428}Mn_{0.572}O_{1.143}F_{0.857} | 0.750 | 4.132(3) | 232.8 |
| Comparative Example 4 | Li_{1.5}Mn_{0.5}OF | 1.000 | 4.126(2) | 155.4 |
| Comparative Example 5 | Li_{1.583}Mn_{0.417}O_{0.833}F_{1.167} | 1.401 | 4.109(2) | 74.5 |
| Comparative Example 6 | Li_{1.667}Mn_{0.333}O_{0.667}F_{1.333} | 2.000 | 4.084(2) | 25.0 |

As shown in Table 1, any of the test cells in Examples has a higher initial discharge capacity than the test cells in Comparative Examples, and the positive electrode active materials in Examples are found to have high capacity. When no F is contained (Comparative Example 1) and when the F content is too large, specifically when the compositional ratio of oxygen is less than 1.3 and N_{F}/N_{O} is as large as more than 0.6 (Comparative Examples 2 to 5), the initial discharge capacity is low and largely differs from Examples. Particularly when the lattice constant a of the positive electrode active material is less than 4.09 (Comparative Example 6), the discharge capacity is significantly lowered. When the lattice constant a is more than 4.16 with the same composition as that of the positive electrode active material in Comparative Examples (Comparative Example 2), it is confirmed that the discharge capacity also tends to be significantly lowered.

As above, the positive electrode active material in Examples may achieve a remarkably high capacity of the battery. When the lattice constant a of the positive electrode active material is within a range of 4.09 to 4.16, particularly within a range of 4.110 to 4.135, it has been confirmed that the discharge capacity tends to increase. For example, in Examples 5 and 6, which use the positive electrode active materials having the same composition, the active material in Example 5, which has the lattice constant a of 4.133(3), has a higher capacity than the active material in Example 6, which has the lattice constant a of 4.158(2). As above, the lattice constant a is an important factor that significantly affects the capacity of the positive electrode active material.

### REFERENCE SIGNS LIST

10 Non-aqueous electrolyte secondary battery
11 Positive electrode
12 Negative electrode
13 Separator
14 Electrode assembly
16 Exterior housing can
17 Sealing assembly
18, 19 Insulating plate
20 Positive electrode lead
21 Negative electrode lead
22 Grooved part
23 Internal terminal plate
24 Lower vent member
25 Insulating member
26 Upper vent member
27 Cap
28 Gasket

## Claims

1. A positive electrode active material for a non-aqueous electrolyte secondary battery, including a lithium-transition metal composite oxide having a crystal structure belonging to a space group Fm-3m and represented by the compositional formula LiₓMn_{y}MₐO_{b}F_{c}, wherein M is at least one metal element excluding Mn, x + y + a = b + c = 2, 1 < x ≤ 1.35, 0.4 ≤ y ≤ 0.9, 0 ≤ a ≤ 0.2, and 1.3 ≤ b ≤ 1.8, wherein
a lattice constant a of the lithium-transition metal composite oxide is 4.09 to 4.16.

2. The positive electrode active material for a non-aqueous electrolyte secondary battery according to claim 1, wherein x representing the compositional ratio of Li in the compositional formula LiₓMn_{y}MₐO_{b}F_{c} satisfies 1.1 ≤ x ≤ 1.3.

3. The positive electrode active material for a non-aqueous electrolyte secondary battery according to claim 1 or 2, wherein the metal element M in the compositional formula LiₓMn_{y}MₐO_{b}F_{c} is at least one selected from the group consisting of Ni, Sn, Mo, Ti, and W.

4. A non-aqueous electrolyte secondary battery, comprising:
a positive electrode including the positive electrode active material according to any one of claims 1 to 3;
a negative electrode;
a separator interposed between the positive electrode and the negative electrode; and
a non-aqueous electrolyte.
